# FASCICULE DE BREVET EUROPEEN

(11) **EP 1 453 217 B1**
(45) Date de publication et mention de la délivrance du brevet: **24.05.2006**
(21) Numéro de dépôt: 04290521.6
(22) Date de dépôt: 26.02.2004
(51) Int. Cl.: H04B 1/69

(54) **Procédé d'atténuation de l'influence d'interférences produites par des systèmes de transmission radio en rafales sur des communications UWB**
Verfahren zur Dämpfung des Einflusses von Interferenzen, die von Burstfunkübertragungssysteme generiert werden, auf UWB Kommunikationen
Method for the attenuation of the influence of interferences produced by radio burst transmision systems on UWB communications

(30) Priorité: 28.02.2003 FR 0302475
(43) Date de publication de la demande: 01.09.2004
(73) Titulaire: CSEM Centre Suisse d'Electronique et de Microtechnique S.A. - Recherche et Développement, 2007 Neuchâtel (CH)
(72) Inventeur: Farserotu, John, 2000 Neuchatel (CH); Hutter, Andreas, 2000 Neuchatel (CH); Gerrits, Johannes, 2016 Cortaillod (CH); Pollini, Alexandre, 1400 Yverdon (CH)
(74) Mandataire: Colas, Jean-Pierre

(56) Documents cités:
- WO-A-01/93445
- US-A- 5 901 172
- US-A1- 2002 126 769
- US-B1- 6 275 544
- US-B1- 6 466 125

## Description

La présente invention est relative à un procédé destiné à réduire l'influence d'interférences parasites, dues à des systèmes de communication sans fil existants, dans un système de communication à bande ultra-large (communications UWB qui est un acronyme pour Ultra Wide Band).

Plus particulièrement, l'invention vise à réduire, voire à éviter toute collision, avec un système voisin de transmission sans fil par rafales (bursty), pouvant entraver la bonne réception d'un signal à bande ultra-large destiné à la communication, notamment, sur de faibles distances, d'informations binaires dont le débit est relativement faible, de l'ordre de 10kbits/s par exemple (communications de type PAN pour Personal Area Network).

On sait que dans la technique des communications radio dites "à impulsions", on peut utiliser, comme porteuse des données à transmettre, des impulsions de courte durée et à large bande de fréquences appelées aussi "ondelettes", celles-ci contenant l'information par exemple sous la forme d'une modulation des positions relatives des ondelettes dans le temps (modulation de type PPM). La largeur de bande du signal engendré peut aller jusqu'à 30% de la fréquence centrale. Pour fixer les idées, cette fréquence centrale peut être située dans une gamme allant de 1 à 5 GHz, par exemple.

Une application intéressante de cette technique UWB pourrait être celle visant les communications dans des milieux (par exemple dans des bâtiments à usage commercial ou utilitaires tels que les hôpitaux par exemple) où différentes liaisons de communication sans fil existent déjà sur différentes bandes de fréquence et à forte densité de puissance (liaison de type GSM, UMTS, WLAN, WLL, Bluetooth™, etc.). En règle générale, ces liaisons fonctionnent avec des techniques dites d'étalement de spectre (Spread Spectrum) et elles ont une portée et des débits binaires bien plus élevés que les techniques de transmission par signaux UWB. Par exemple, les communications de type WLAN ont une portée allant jusqu'à 30 m et des débits de 2 à 50 Mbits/s.

Le document US A 5 901172 décrit une méthode de réception d'un signal UWB, dans laquelle le récepteur utilise une diode tunnel détectrice. Un microprocesseur contrôle cette diode et la place, de manière alternée, dans un état de détection et dans un état où elle est reliée à la masse.

Si ces techniques de communication à bande de fréquences ultra-large ont l'avantage, pour une liaison de communication donnée, de permettre une répartition de la puissance émise sur une très large bande de fréquences, les rendant donc peu gênantes vis-à-vis des autres liaisons de communication à bande étroite, elles subissent néanmoins les interférences des liaisons radio existantes qui sont ressenties au niveau du récepteur comme autant de parasites nuisant à une bonne transmission des messages utiles.

L'invention a pour but de fournir un procédé destiné à réduire autant que possible l'influence des interférences, dues à des communications radio existantes, sur les transmissions UWB.

L'invention a donc pour objet un procédé d'atténuation de l'influence d'interférences produites par des systèmes de transmission radio en rafales sur des communications UWB pendant lesquelles de l'information utile est transmise par un signal d'un émetteur comprenant un modulateur de signaux UWB et une antenne d'émission, vers un récepteur, ce dernier comprenant une antenne de réception et des moyens de détection et de démodulation pour discriminer ladite information utile dans le signal reçu sur ladite antenne de réception, remarquable en ce qu'il consiste, dans ledit récepteur, à comparer le signal reçu sur ladite antenne de réception à une première valeur de seuil de puissance et à interdire la transmission du signal reçu vers lesdits moyens de détection/démodulation, si le niveau de puissance dudit signal reçu dépasse ladite première valeur de seuil.

Le procédé suivant l'invention peut en outre comporter les caractéristiques intéressantes suivantes :
- il consiste à comparer ledit signal reçu à une deuxième valeur de seuil de puissance et à autoriser un traitement dudit signal reçu par lesdits moyens de détection/démodulation, lorsque le niveau de puissance dudit signal reçu est inférieur à ladite seconde valeur de seuil,
- il consiste, lorsque le niveau dudit signal reçu est situé entre lesdites première et seconde valeurs de seuil, à détecter dans le signal reçu les périodes de silence présentes dans les composantes de ce signal dues aux interférences, à engendrer un signal d'ajustement temporel et, dans ledit émetteur à ajuster les caractéristiques temporelles de ladite information utile de manière à n'assurer la communication entre ledit émetteur et ledit récepteur que pendant lesdites périodes de silence,
- ladite seconde valeur de seuil est réglable de l'extérieur dudit récepteur,
- ladite seconde valeur de seuil est fixée par le récepteur lui-même à partir des signaux reçus,
- le procédé consiste à transférer ledit signal d'ajustement temporel dudit récepteur vers ledit émetteur par un signal UWB,
- le procédé consiste à régler ledit signal d'ajustement temporel en fonction de l'évolution dans le temps desdites périodes de silence,
- le procédé consiste à engendrer dans le récepteur un signal d'avertissement, lorsque la transmission dudit signal est interdite vers lesdits moyens de détection/démodulation,
- le procédé consiste à engendrer un signal d'avertissement dans ledit récepteur, lorsque le niveau dudit signal reçu est situé entre lesdites première et deuxième valeurs de seuil.

Grâce à ces caractéristiques, la communication entre l'émetteur et le récepteur est inopérante lorsque les interférences ont un niveau tel que l'information utile ne peut pas être fidèlement reçue.

L'invention a également pour objet un ensemble pour la mise en oeuvre du procédé suivant l'invention, comprenant en combinaison un émetteur destiné à émettre ledit signal UWB, et un récepteur destiné à recevoir ledit signal UWB, et remarquable en ce qu'il comprend :
- un équipement de détection d'un paramètre physiologique destiné à engendrer ladite information utile et connecté audit émetteur, ledit équipement étant adapté pour être porté par une personne et pour détecter de celle-ci une caractéristique physique, telle que la fréquence cardiaque; et
- un relais connecté audit récepteur et destiné à transférer un signal représentatif dudit signal reçu à des fins de surveillance médicale.

L'ensemble suivant l'invention peut en outre comporter les caractéristiques avantageuses suivantes :
- ledit relais est adapté pour être porté par la personne surveillée médicalement,
- ledit relais est un poste fixe connecté à un réseau à longue distance.

D'autres caractéristiques et avantages de la présente invention apparaîtront au cours de la description qui va suivre, donnée uniquement à titre d'exemple et faite en se référant aux dessins annexés sur lesquels:
la figure 1 montre un schéma synoptique d'un émetteur et d'un récepteur à très large bande qui communiquent entre eux par des signaux en ondelettes selon le procédé de l'invention; et
la figure 2 est un diagramme des temps illustrant un aspect important du procédé selon l'invention.

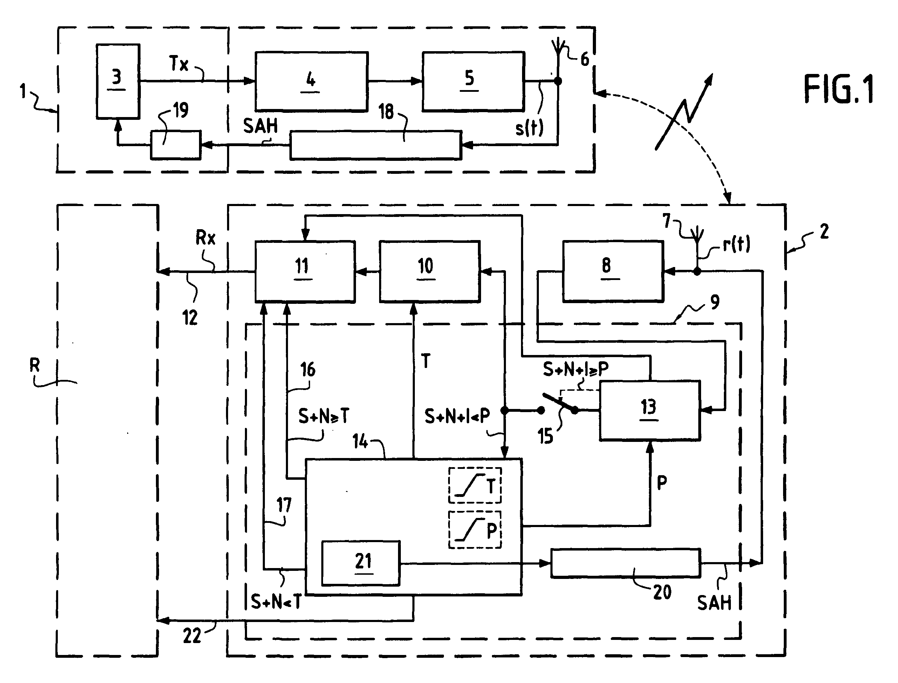

Sur la figure 1, on a représenté un émetteur 1 et un récepteur 2 entre lesquels une communication peut être établie sur une certaine distance à l'aide de signaux UWB.

Bien que l'invention n'y soit pas limitée, une application intéressante de l'invention se situe dans le domaine de ce qu'il est convenu d'appeler celui des réseaux PAN. Il peut s'agir par exemple de la surveillance de l'état de santé de personnes souffrant d'affections où il est très important de connaître à tout moment certaines données physiologiques. Il peut en être ainsi par exemple pour les personnes souffrant d'une affection cardiaque, une donnée essentielle étant dans ce cas la fréquence cardiaque.

Les données physiologiques étant détectées, l'information correspondante peut être transmise vers un poste relais se trouvant à proximité (à une distance de l'ordre de quelques mètres par exemple) avec un débit binaire réduit, par exemple de l'ordre de 5 à 10 kbits/sec seulement.

Ainsi, dans cette application décrite à titre d'exemple uniquement, l'émetteur 1 peut être associé ou faire partie d'un équipement 3 de détection d'une caractéristique physique d'une personne, caractéristique qui est importante pour la surveillance médicale de celle-ci. Dans l'exemple spécifique décrit ici, il s'agit d'un équipement destiné à détecter la fréquence cardiaque, situé à cet effet sur le corps d'un patient à surveiller, à un endroit où la circulation sanguine peut facilement être examinée. Par exemple, l'ensemble de l'émetteur 1 et de l'équipement 3 peut être installé sur l'oreille du patient pour détecter in situ la circulation sanguine. Le récepteur 2 peut être situé dans une montre-bracelet servant de relais et portée par la personne. Par ce relais, l'information recueillie peut être transférée plus loin par exemple vers une centrale de surveillance médicale éventuellement via un poste téléphonique ou un réseau à longue distance, tel Internet.

Dans un autre agencement, le récepteur 2 peut être incorporé directement dans un poste téléphonique servant alors de relais. Le relais est symbolisé par le rectangle R de la figure 1.

En se référant à la figure 1, l'équipement 3 engendre un train d'impulsions Tx dans lequel l'information utile (en l'occurrence la fréquence cardiaque) peut être contenue sous forme d'une modulation PPM, bien connue des spécialistes. Ce train d'impulsions est appliqué à l'émetteur 1 qui comporte un modulateur UWB 4 raccordé à cet effet à l'équipement 3, le signal modulé étant appliqué à un circuit de filtrage et de mise en forme 5 envoyant un signal utile s(t) UWB modulé en PPM en fonction du signal Tx, sur une antenne 6.

Le signal s(t) émis par l'antenne 6 est reçu sur une antenne 7 du récepteur 2 affecté de certaines perturbations comme du bruit, du fading ou des interférences dues aux autres communications mises en oeuvre à proximité. Ce signal sera donc de la forme r(t)=S/(N+I), relation dans laquelle S est la puissance reçue sur l'antenne 7, N représente le bruit et I les interférences.

L'antenne 7 est connectée à un filtre 8 qui transmet le signal reçu et filtré vers un bloc de traitement 9 destiné à réduire, voire à éliminer l'influence des interférences affectant le signal r(t).

Après traitement, le signal est appliqué à un détecteur UWB 10 et de là à un démodulateur UWB 11 qui, à sa sortie, produit des données Rx dont le contenu est représentatif de celui du signal Tx préalablement envoyé au modulateur UWB 4 de l'émetteur 1. Ces données Rx apparaissent sur une borne de sortie 12.

Le bloc de traitement 9 comporte des moyens symbolisés par un bloc 13 dit "de protection" contre les interférences et des moyens symbolisés par le bloc 14 dit "de détection" destiné à assurer une détection d'interférences, puis d'en analyser le contenu.

Le bloc de détection 14 est agencé pour fixer deux valeurs de seuil de puissance appelées respectivement P et T avec P»T.

La valeur de seuil P est appliquée au bloc de protection 13. Celui-ci est agencé pour comparer la puissance du signal filtré apparaissant sur la sortie du filtre 8 au seuil P. Si le niveau du signal est supérieur ou égal à ce seuil, le bloc de protection 13 commande une fonction de blocage symbolisé par l'interrupteur 15 sur la figure 1, en inhibant toute transmission du signal vers le détecteur 10. Dans ce cas, les interférences sont d'une puissance telle qu'aucune réception correcte du signal utile n'est possible et il convient alors d'empêcher le fonctionnement du récepteur 2. Un signal d'avertissement peut être engendré par le bloc de protection 13 et transmis au démodulateur 11, pour que la réception du niveau élevé d'interférences puisse être signalée sur la sortie 12 et de là au relais R. Dans le cas contraire, la fonction de blocage est levée (interrupteur 15 fermé) et le signal filtré est appliqué au détecteur 10 et également au bloc de détection 14.

Grâce à une autre caractéristique importante de l'invention, il est possible de déceler dans le signal reçu r(t) le signal utile Rx, même en présence d'une ou de plusieurs sources d'interférence, à condition toutefois que leur niveau ne soit pas supérieur à la valeur de seuil P.

Si tel est le cas, l'interrupteur 15 est fermé. Le niveau de puissance du signal r(t) filtré est alors comparé à la seconde valeur de seuil T. Si la puissance du signal filtré est supérieure ou égale à cette valeur de seuil T, on considère que l'information utile ne pourra pas être correctement détectée dans le signal filtré. Dans ce cas, le bloc de détection 14 envoie, par l'intermédiaire d'une ligne 16, un signal de rejet au démodulateur 11, qui est de ce fait bloqué. Dans ces conditions encore, aucun signal utile n'est fourni sur la sortie 12.

Cependant, l'émetteur 1 comporte également un circuit de réception 18 qui est raccordé à un circuit d'horloge 19 déterminant la relation temporelle des impulsions utiles du signal Tx fourni par l'équipement 3.

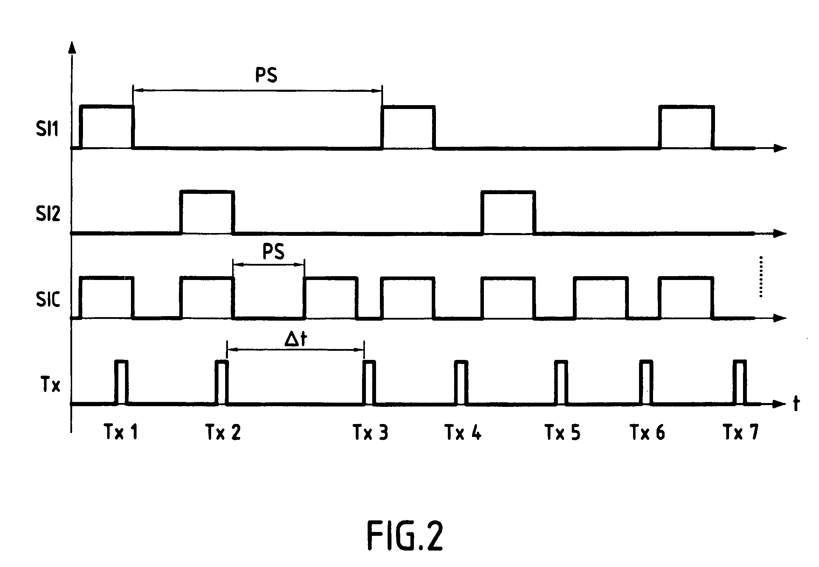

Le récepteur 2, de son côté, comporte en outre un circuit d'émission 20 capable d'envoyer un signal d'ajustement d'horloge SAH à l'antenne 7 sous forme d'un signal contenant une information d'ajustement d'horloge. Ce signal peut être transmis à l'émetteur 1, où il est reçu par le circuit de réception 18. Le bloc de détection 14 est agencé de telle façon qu'il soit capable d'analyser la ou les composantes d'interférence contenues dans le signal reçu sur l'antenne 7 et de discriminer dans chacune d'elles les périodes de silence PS (voir aussi la figure 2) parmi les périodes d'activité. Le bloc de détection 14 pourra tirer de cette information de discrimination les périodes de silence PS pendant lesquelles les composantes dues aux sources d'interférence ne sont pas présentes dans le signal r(t) reçu sur l'antenne 7. Le bloc de détection 14 comporte également un générateur 21 du signal d'ajustement SAH qui est modulé sur une porteuse par le circuit d'émission 20 et envoyé au circuit de réception 18 par l'intermédiaire des antennes 7 et 6. Le signal d'ajustement SAH est représentatif d'un intervalle de temps Δt par lequel le signal utile Tx issu de l'équipement 3 sera retardé pour que dans le signal reçu r(t) l'information à détecter et à envoyer à la sortie 12 ne coïncide plus avec toutes les impulsions dues aux interférences.

Ce processus est illustré sur la figure 2, dans laquelle les deux premières lignes représentent deux des signaux SI1 et SI2 de sources d'interférence, la troisième ligne du diagramme de la figure 2 représentant l'image du signal parasitaire composite SIC résultant des différents signaux d'interférence. Dans l'exemple représenté, il est supposé que deux impulsions utiles Tx1 et Tx2 coïncident avec des impulsions dues aux interférences de sorte qu'elles ne sont ni démodulées ni envoyées sur la sortie 12. Le bloc de détection 14 envoie donc dans ce cas un signal d'inhibition sur la ligne 16.

Dès que le bloc de détection 14 a déterminé les périodes de silence PS dans toutes les émissions d'interférence, il envoie le signal d'ajustement SAH à l'émetteur 1 et débloque en même temps le démodulateur 11 en activant la ligne 17. Les impulsions utiles suivantes Tx3, Tx4, Tx5....... peuvent alors être acceptées et sont transmises sur la sortie 12. Si la longueur de la période de silence PS change, le bloc de détection 14 fait varier l'intervalle Δt en conséquence de manière à ce que les impulsions utiles Tx soit toujours émises pendant une période de silence PS, tant que la puissance des interférences reçues se situe entre les valeurs de seuil P et T.

En revanche, si la puissance du signal filtré est inférieure à la seconde valeur de seuil T, le bloc de détection 14 envoie, par l'intermédiaire de la ligne 17, un signal de déblocage au démodulateur 11, de sorte que le signal détecté par le détecteur 10 est directement traité par le démodulateur 11 et un signal utile Rx peut être présenté sur la sortie 12 à condition bien entendu, qu'à l'instant considéré, une émission d'un signal s(t) au niveau de l'émetteur 1 ait lieu.

La valeur du seuil de puissance T doit être fixée en fonction des caractéristiques des sources d'interférence susceptibles d'émettre dans l'espace où l'émetteur 1 et le récepteur 2 seront utilisés et également du niveau de bruit auquel on risque de s'attendre dans cet espace. Cette valeur est donc de préférence soit ajustable de l'extérieur du récepteur, soit fixée par le récepteur lui-même. Le récepteur peut fixer cette valeur en permettant au détecteur 14 d' "écouter" pendant un certain temps son environnement radio. Cette détection automatique des valeurs des seuils de référence peut être répétée à l'envie à des intervalles adéquats. En tout état de cause, la valeur de seuil doit être assez faible pour éviter les erreurs de détection dues aux sources d'interférence et, en même temps, suffisamment élevée pour éviter les fausses alarmes.

Avantageusement, tous les états de fonctionnement tels que le franchissement des valeurs de seuil P et T et le décalage temporel à l'aide du signal SAH, pourront être signalés au relais R par l'intermédiaire d'une fonction de signalisation mise en oeuvre dans le bloc de détection 14, les signaux correspondant étant appliqués au relais R par l'intermédiaire d'une ligne 22.

## Revendications

1. Procédé d'atténuation de l'influence d'interférences produites par des systèmes de transmission radio en rafales sur des communications UWB pendant lesquelles de l'information utile (Tx) est transmise par un signal d'un émetteur (1) comprenant un modulateur de signaux UWB (4, 5) et une antenne d'émission (6), vers un récepteur (2), ce dernier comprenant une antenne de réception (7) et des moyens de détection et de démodulation (10, 11) pour discriminer ladite information utile (Tx) dans le signal (r(t)) reçu sur ladite antenne de réception (7), **caractérisé en ce qu'**il consiste, dans ledit récepteur (2), à comparer le signal (r(t)) reçu sur ladite antenne de réception (7) à une première valeur de seuil de puissance (P) et à interdire la transmission du signal reçu vers lesdits moyens de détection/démodulation (10, 11), si le niveau de puissance dudit signal reçu (r(t)) dépasse ladite première valeur de seuil (P).

2. Procédé selon la revendication 1, **caractérisé en ce qu'**il consiste également à comparer ledit signal reçu (r(t)) à une deuxième valeur de seuil de puissance (T) et à autoriser un traitement dudit signal reçu (r(t)) par lesdits moyens de détection/démodulation (10, 11), lorsque le niveau de puissance dudit signal reçu est inférieur à ladite seconde valeur de seuil (T).

3. Procédé selon la revendication 2, **caractérisé en ce qu'**il consiste, lorsque le niveau dudit signal reçu (r(t)) est situé entre lesdites première (P) et seconde (T) valeurs de seuil, à détecter dans le signal reçu les périodes de silence (PS) présentes dans les composantes de ce signal dues aux interférences (SI1, SI2), à engendrer un signal d'ajustement temporel (SAH) et, dans ledit émetteur (1) à ajuster les caractéristiques temporelles de ladite information utile (Tx) de manière à n'assurer la communication entre ledit émetteur (1) et ledit récepteur (2) que pendant lesdites périodes de silence (PS).

4. Procédé selon la revendication 2 ou la revendication 3, **caractérisé en ce que** ladite seconde valeur de seuil (T) est réglable de l'extérieur dudit récepteur (1).

5. Procédé selon la revendication 2 ou la revendication 3, **caractérisé en ce que** ladite seconde valeur de seuil (T) est fixée par le récepteur lui-même à partir des signaux reçus.

6. Procédé selon l'une des revendications 3 à 5, **caractérisé en ce qu'**il consiste à transférer ledit signal d'ajustement temporel (SAH) dudit récepteur (2) vers ledit émetteur (1) par un signal UWB.

7. Procédé selon l'une quelconque des revendications 3 à 6, **caractérisé en ce qu'**il consiste à régler ledit signal d'ajustement temporel (SAH) en fonction de l'évolution dans le temps desdites périodes de silence (PS).

8. Procédé selon la revendication 1, **caractérisé en ce qu'**il consiste à engendrer dans le récepteur (2) un signal d'avertissement, lorsque la transmission dudit signal est interdite vers lesdits moyens de détection/démodulation (10, 11).

9. Procédé selon l'une quelconque des revendications 3 à 8, **caractérisé en ce qu'**il consiste à engendrer un signal d'avertissement dans ledit récepteur (2), lorsque le niveau dudit signal reçu (r(t)) est situé entre lesdites première (P) et deuxième (T) valeurs de seuil.

10. Ensemble pour la mise en oeuvre du procédé suivant l'une quelconque des revendications précédentes comprenant en combinaison un émetteur (1) destiné à émettre ledit signal UWB, et un récepteur (2) destiné à recevoir ledit signal UWB,
**caractérisé en ce qu'**il comprend
- un équipement (3) de détection d'un paramètre physiologique destiné à engendrer ladite information utile et connecté audit émetteur (1), ledit équipement étant adapté pour être porté par une personne et pour détecter de celle-ci une caractéristique physique, telle que la fréquence cardiaque; et
- un relais (R) connecté audit récepteur (2) et destiné à transférer un signal (Rx) représentatif dudit signal reçu (r(t)) à des fins de surveillance médicale.

11. Ensemble suivant la revendication 10, **caractérisé en ce que** ledit relais (R) est adapté pour être porté par la personne surveillée médicalement.

12. Ensemble suivant la revendication 10, **caractérisé en ce que** ledit relais (R) est un poste fixe connecté à un réseau à longue distance.

## Claims

1. A method of attenuating the influence of interference produced by bursty radio transmission systems on UWB communications during which useful information (Tx) is transmitted by a signal from a sender (1) comprising a UWB signal modulator (4, 5) and a send antenna (6) to a receiver (2) comprising a receive antenna (7) and detection and demodulation means (10, 11) for discriminating said useful information (Tx) in the signal (r(t)) received at said receive antenna (7), **characterized by**, in said receiver (2), comparing said signal (r(t)) received at said receive antenna (7) to a first power threshold value (P) and blocking transmission of said received signal to said detection/demodulation means (10, 11) if the power level of said received signal (r(t)) exceeds said first threshold value (P).

2. The method claimed in claim 1, further consisting in comparing said received signal (r(t)) to a second power threshold value (T) and authorizing processing of said received signal (r(t)) by said detection/demodulation means (10, 11) if said power level of said received signal is below said second threshold value (T).

3. The method claimed in claim 2 wherein, if the level of said received signal (r(t)) is between said first (P) and second (T) threshold values, periods of silence (PS) present in components of said signal caused by interferences (Sl1,Sl2) are detected in said received signal, a temporal adjustment signal (SAH) is generated, and, in said sender (1), the temporal characteristics of said useful information (Tx) are adjusted to provide communication between said sender (1) and said receiver (2) only during said periods of silence (PS).

4. The method claimed in claim 2 or 3 wherein said second threshold value (T) is adjustable from outside said receiver (1).

5. The method claimed in claim 2 or 3 wherein said second threshold value (T) is set by said receiver itself on the basis of signals received.

6. The method claimed in any claim 3 to 5 wherein said temporal adjustment signal (SAH) is transferred from said receiver (2) to said sender (1) by means of a UWB signal.

7. The method claimed in any claim 3 to 6 wherein said temporal adjustment signal (SAH) is adjusted as a function of the evolution in time of said periods of silence (PS).

8. The method claimed in claim 1 wherein a warning signal is generated in said receiver (2) when transmission of said signal to said detection/demodulation means (10, 11) is blocked.

9. The method claimed in any claim 3 to 8 wherein a warning signal is generated in said receiver (2) when the level of said received signal (r(t)) is between said first (P) and second (T) threshold values.

10. A system for implementing a method as claimed in any preceeding claim, comprising in combination a sender (1) adapted to send said UWB signal and a receiver (2) adapted to receive said UWB signal,
**characterized in that** it comprises :
an equipment (3) for detecting a physiological parameter adapted to generate said useful information and connected to said sender (1), said equipment being adapted to be worn by a person and to detect a physical characteristic thereof such as the heart rate, and
a relay station (R) connected to said receiver (2) and adapted to transfer a signal (Rx) representative of said received signal (r(t)) for medical monitoring purposes.

11. The system claimed in claim 10 wherein said relay station (R) is adapted to be worn by the medically monitored person.

12. The system claimed in claim 10 wherein said relay station (R) is a fixed station connected to a long-range network.

## Patentansprüche

1. Verfahren zur Dämpfung des Einflusses von Interferenzen, die von Burstfunkübertragungssystemen generiert werden, auf UWB-Kommunikationen, während derer nützliche Information (Tx) durch ein Signal von einem Sender (1) übertragen wird, der einen UWB-Signalmodulator (4, 5) und eine Sendeantenne (6) umfasst, an einen Empfänger (2), wobei letzterer eine Empfangsantenne (7) und Mittel zum Erfassen und zum Demodulieren (10, 11) umfasst, um die nützliche Information (Tx) in dem Signal (r(t)) zu unterscheiden, das an der Empfangsantenne (7) empfangen wird, **dadurch gekennzeichnet, dass** es darin besteht, dass es in dem Empfänger (2) das Signal (r(t)), das an der Empfangsantenne (7) empfangen wird, mit einem ersten Leistungs-Schwellenwert (P) vergleicht und die Übertragung des empfangenen Signals an die Mittel zum Erfassen/Demodulieren (10, 11) verhindert, wenn das Leistungsniveau des empfangenen Signals (r(t)) den ersten Schwellenwert (P) überschreitet.

2. Verfahren nach Anspruch 1, **dadurch gekennzeichnet, dass** es auch darin besteht, dass es das empfangene Signal (r(t)) mit einem zweiten Leistungs-Schwellenwert (T) vergleicht und eine Verarbeitung des empfangenen Signals (r(t)) durch die Mittel zum Empfangen/Demodulieren (10, 11) autorisiert, wenn das Leistungsniveau des empfangenen Signals unter dem zweiten Schwellenwert (T) liegt.

3. Verfahren nach Anspruch 2, **dadurch gekennzeichnet, dass** es darin besteht, dass es, wenn das Niveau des empfangenen Signals (r(t)) zwischen dem ersten (P) und zweiten (T) Schwellenwert liegt, in dem empfangenen Signal die empfangslosen Perioden (PS) erfasst, die in den Bestandteilen dieses Signals aufgrund der Interferenzen (SI1, SI2) vorhanden sind, darin, ein zeitliches Einstellungssignal (SAH) zu generieren und in dem Sender (1) die zeitlichen Merkmale der nützlichen Information (Tx) so einzustellen, dass die Kommunikation zwischen dem Sender (1) und dem Empfänger (2) nur während den empfangslosen Perioden (PS) sichergestellt ist.

4. Verfahren nach Anspruch 2 oder Anspruch 3, **dadurch gekennzeichnet, dass** der zweite Schwellenwert (T) von außerhalb des Empfängers (1) regelbar ist.

5. Verfahren nach Anspruch 2 oder Anspruch 3, **dadurch gekennzeichnet, dass** der zweite Schwellenwert (T) durch den Empfänger selbst anhand der empfangenen Signale festgelegt wird.

6. Verfahren nach einem der Ansprüche 3 bis 5, **dadurch gekennzeichnet, dass** es darin besteht, das zeitliche Einstellungssignal (SAH) des Empfängers (2) an den Sender (1) durch ein UWB-Signal zu übertragen.

7. Verfahren nach einem der Ansprüche 3 bis 6, **dadurch gekennzeichnet, dass** es darin besteht, das zeitliche Einstellungssignal (SAH) in Abhängigkeit von der Entwicklung über die Zeit der empfangslosen Perioden (PS) zu regeln.

8. Verfahren nach Anspruch 1, **dadurch gekennzeichnet, dass** es darin besteht, in dem Empfänger (2) ein Warnsignal zu generieren, wenn die Übertragung des Signals an die Mittel zum Erfassen/Demodulieren (10, 11) verhindert wird.

9. Verfahren nach einem der Ansprüche 3 bis 8, **dadurch gekennzeichnet, dass** es darin besteht, ein Warnsignal in dem Empfänger (2) zu generieren, wenn das Niveau des empfangenen Signals (r(t)) zwischen dem ersten (P) und zweiten (T) Schwellenwert liegt.

10. Anordnung zum Verwenden des Verfahrens nach einem der vorhergehenden Ansprüche, umfassend in Verbindung einen Sender (1), der dazu bestimmt ist, das UWB-Signal auszusenden, und einen Empfänger (2), der dazu bestimmt ist, das UWB-Signal zu empfangen, **dadurch gekennzeichnet, dass** er umfasst
- eine Vorrichtung (3) zum Erfassen eines physiologischen Parameters, die dazu bestimmt ist, die nützliche Information zu generieren und mit dem Sender (1) verbunden ist, wobei die Vorrichtung so angepasst ist, dass sie von einer Person getragen wird und ein physisches Merkmal dieser erfasst, wie die Herzfrequenz; und
- ein Relais (R), das mit dem Empfänger (2) verbunden und dazu bestimmt ist, ein Signal (Rx) zu Zwecken der medizinischen Überwachung zu übertragen, das das empfangene Signal (r(t)) darstellt.

11. Anordnung nach Anspruch 10, **dadurch gekennzeichnet, dass** das Relais (R) so angepasst ist, dass es von der medizinisch überwachten Person getragen wird.

12. Anordnung nach Anspruch 10, **dadurch gekennzeichnet, dass** das Relais (R) ein feststehendes Gerät ist, das mit einem Fernleitungsnetz verbunden ist.
